# EUROPÄISCHE PATENTANMELDUNG

(11) **EP 1 186 800 A1**
(43) Veröffentlichungstag der Anmeldung: **13.03.2002**
(21) Anmeldenummer: 00119802.7
(22) Anmeldetag: 12.09.2000
(51) Int. Cl.: F16H 25/20, F16D 1/10

(54) **Linearantrieb**

(71) Anmelder: RK Rose + Krieger GmbH & Co. KG Verbindungs- und Positioniersysteme, D-32423 Minden (DE)
(72) Erfinder: Schunke, Kurt, 32427 Minden (DE); Buchholz, Bernd Dr., 32369 Rahden (DE); Palm, Dieter, 33824 Werther (DE)
(74) Vertreter: Specht, Peter, Dipl.-Phys.

(57) **Zusammenfassung**

Ein nicht selbsthemmender Linearantrieb der mit einer Schlingfeder zum Halten der Last bei Stillstand des Antriebsmotors ausgestattet ist, soll so gestaltet werden, dass die Lastabtragung beim Wirksamwerden der Schlingfeder über eine große Fläche erfolgt, und dass außerdem die Betriebssicherheit erhöht wird.

Bei dem erfindungsgemäßen Linearantrieb (10) erfolgt die antriebstechnische Verbindung zwischen dem Abtriebszapfen (14) des Getriebes (12) mit einer Spindel (15) über eine Klauenkupplung (13a, 13b) die von einer Schlingfeder umhüllt ist, und ein Ende der Schlingfeder (17) mit einer Kupplungshälfte (13b) in einer Mitnahmeverbindung steht, so dass bei abgeschaltetem Antriebsmotor (11) die Schlingfeder (17) aufgeweitet wird und mit der Innenfläche einer Bremshülse (18) in Kontakt kommt.

Der erfindungsgemäße Linearantrieb ist besonders für Hubsäulen geeignet.

## Beschreibung

Die Erfindung betrifft einen Linearantrieb, vorzugsweise einen Stelltrieb, der mit einem oder mit mehreren Antriebszügen ausgestattet ist, und jeder Antriebszug mit einem Antriebsmotor, einem die Drehzahl herabsetzenden Getriebe zum Antrieb eines rotierend antreibbaren Getriebeelementes sowie mit einer Schlingfeder zum Halten der Last bei Stillstand des Antriebsmotors ausgestattet ist.

Der in Frage kommende Linearantrieb kann vielfältig eingesetzt werden, beispielsweise zum Verstellen von Möbelbauteilen, wie Tischplatten, Kopf- und Fußteile von Lattenrosten.

Je nach Einsatzzweck kann der Linearantrieb ein Einzelantrieb mit einem Antriebszug oder mit zwei oder mehr Antriebszügen ausgestattet sein. Ferner kann die Drehachse des Antriebsmotors mit der Drehachse des rotierend antreibbaren Getriebeelementes fluchtend, parallel und im Abstand oder auch rechtwinklig stehen. Die in Frage kommenden Linearantriebe können so ausgelegt sein, dass sie selbsthemmend sind, d.h. nach dem Abschalten des Antriebsmotors verbleibt das angeschlossene Bauteil in der jeweiligen Stellung.

Es werden jedoch verstärkt Linearantriebe eingesetzt, die nicht mehr selbsthemmend sind, da der Wirkungsgrad höher ist und die Lineargeschwindigkeit des Abtriebsgliedes größer ist. Bei nicht selbsthemmenden Antrieben ist es jedoch dann notwendig, dass diese zum Halten der Last bei abgeschaltetem Antriebsmotor mit einer entsprechend ausgelegten Bremse versehen sind.

Derartige Bremsen werden in der Antriebstechnik auch als Lastmoment- oder Rücklaufsperren bezeichnet. So ist es beispielsweise aus einem Artikel, erschienen in der Fachzeitschrift Antriebstechnik 32 (1993/Nr. 1/Seite 57ff) sowohl bei Leistungsantrieben auch als bei Stellantrieben bekannt, Schlingfedern als Bremselemente zu verwenden. Aus diesem Artikel ist es bekannt, dass die Bremse in einem Stellantrieb im Schadensfall, wie z.B. bei Ausfall des Motors die Funktion des Haltens der Last übernehmen muß. Es geht ferner noch daraus hervor, dass besonders bei Stellantrieben häufig nur die Funktion des Haltens oder Hemmens gefordert wird, d.h. nach dem Abschalten des Motors soll sich das linear bewegbare Abtriebsglied nicht mehr bewegen.

Eine konstruktive Umsetzung mit Verwendung einer Schlingfeder für einen nicht selbsthemmenden Linearantrieb ist aus der EP 0662573 B1 bekannt, die auf das Jahr 1994 zurückgeht. Bei diesem Linearantrieb ist ein Ende der Schlingfeder in dem Antriebsgehäuse befestigt und eine bestimmte Anzahl von Windungen ist um das Ende einer rotierend antreibbaren Spindel oder um ein zylindrisches Element einer diesem zugeordneten Kraftübertragungskupplung so angeordnet, dass die Schlingfeder während der Vorwärts- bzw. Ausfahrbewegung eine freie Drehung der Spindel zuläßt aber bei der Rückwärts- bzw. Rückzugsbewegung eine solche Bremskraft auf die Spindel ausübt, dass die Spindel wie eine selbsthemmende Spindel wirkt.

Bei diesem Linearantrieb wird die von der Schlingfeder aufzubringende Haltekraft über das im Getriebegehäuse festgelegte Ende einer Windung der Schlingfeder in das Gehäuse abgeleitet. Dies führt zu einer extrem hohen Belastung des an das Ende der Schlingfeder angrenzenden Teiles des Getriebegehäuses. Außerdem ist das Ende der Windung der Schlingfeder abzuwinkeln, so dass nicht nur die Gefahr der Beschädigung des Getriebegehäuses, sondern auch der Bruch der Schlingfeder hervorgerufen wird, so dass sie wirkungslos wird. Eine zuvor beschriebene Konstruktion ist daher nur begrenzt einsatzfähig und die notwendige Betriebssicherheit ist nicht gegeben.

Der Erfindung liegt die Aufgabe zugrunde, einen Linearantrieb der eingangs näher beschriebenen Art so auszubilden, dass die Lastabtragung in der Funktionsstellung der Schlingfeder über eine derart große Fläche erfolgt, dass eine Beschädigung oder ein Bruch des Getriebegehäuses ausgeschlossen werden kann, und dass es außerdem nicht zu einem Bruch der Schlingfeder kommt, so dass die Betriebssicherheit voll gegeben ist.

Die gestellte Aufgabe wird gelöst, indem die Schlingfeder mit einem rotierend antreibbaren Bauteil des Linearantriebes derart in einer Mitnahmeverbindung steht, dass in einer bestimmten Drehrichtung des rotierend antreibbaren Bauteils die Schlingfeder durch Verformung als ein nach dem Friktionsprinzip arbeitendes Bremselement wirkt.

Im Normalbetriebszustand bei eingeschaltetem Antriebsmotor wird die Schlingfeder nunmehr mit der gleichen Drehzahl wie das rotierend antreibbare Bauteil mitgenommen und zwar unabhängig von der Drehrichtung dieses Bauteils. In beiden Drehrichtungen ist demzufolge bei eingeschaltetem Antriebsmotor die Schlingfeder unwirksam. Bei abgeschaltetem Antriebsmotor wirkt die Last des an den Linearantrieb angeschlossenen Bauelementes auf den Linearantrieb, woraus sich daraus durch die Nichtselbsthemmung des Linearantriebes eine bestimmte Drehrichtung des rotierend antreibbaren Bauteils ergibt. Dadurch wird die Schlingfeder so verformt, dass sie mit einem Gegenstück in Kontakt kommt, wodurch Reibungskräfte in einer solchen Höhe aufgebaut werden, dass die Last gehalten wird, d.h. das an den Linearantrieb angeschlossene Bauteil verändert seine Position nicht mehr. Die Kräfte werden nicht über das Ende einer Windung der Schlingfeder sondern über deren gesamte Außenfläche abgetragen.

Besonders vorteilhaft ist, wenn die Schlingfeder durch Aufweitung als Bremselement wirkt, wobei die Windungen sich an der Innenfläche einer unverdrehbaren Bremshülse abstützen. Dadurch ergibt sich eine konstruktiv einfache Lösung, da die Schlingfeder direkt angrenzend an das rotierend antreibbare Bauteil angeordnet werden kann. Besonders vorteilhaft ist, wenn das Getriebe des Linearantriebes mit dem rotierend antreibbaren Getriebelement, beispielsweise eine Spindel durch eine Kupplung miteinander antriebstechnisch gekoppelt ist. Diese Kupplung ist dann das rotierend antreibbare Bauteil, dem die Schlingfeder zugeordnet ist. Besonders vorteilhaft ist, wenn die Kupplung als Klauenkupplung ausgebildet ist, und das ein Ende der Federwindungen der Schlingfeder mit einer Kupplungshälfte der Klauenkupplung in der Mitnahmeverbindung steht. Durch die Klauenkupplung wird eine formschlüssige Verbindung der beiden Kupplungshälften geschaffen, so dass es zu keinerlei Schlupf oder dergleichen kommt. Außerdem können durch die beiden miteinander in Eingriff stehenden Kupplungshälften Fluchtungsfehler oder dergleichen zwischen dem Abtriebsglied und dem Motor bzw. dem Getriebe ausgeglichen werden. Ferner ist besonders vorteilhaft, wenn aus der Kupplung, der Schlingfeder und der Bremshülse eine Baueinheit gebildet wird, die wahlweise einsetzbar ist. Es ist dann möglich, dass der Ausgangszapfen des Getriebes mit dem rotierend antreibbaren Getriebeelement direkt gekoppelt wird, wenn beispielsweise bei einem nicht selbsthemmenden Linearantrieb das Halten der Last bei abgeschaltetem Antriebsmotor nicht benötigt wird. Der Linearantrieb ist dann sinngemäß nach einem Baukastenprinzip aufgebaut. Ferner kann die besagte Baueinheit komplett vormontiert werden.

Damit sich die Schlingfeder verformt bzw. aufweitet ohne dass sich die Motorwelle noch ein klein wenig dreht, ist vorgesehen, dass die ineinandergreifenden Klauen der Kupplungshälften mit Spiel derart ineinandergreifen, dass nach dem Abschalten des Antriebsmotors die dem rotierend antreibbaren Getriebeelement zugeordnete Kupplungshälfte zum Überführen der Schlingfeder in die Bremsstellung sich um einen relativ geringen Winkel gegenüber der anderen Kupplungshälfte verdreht. Das notwendige Spiel lässt sich in einfachster Weise erreichen, wenn die Klauen des dem rotierend antreibbaren Getriebelementes zugeordnete Kupplungshälfte sich über unterschiedliche Winkel erstrecken. In bevorzugter Weise ist jede Kupplungshälfte mit zwei Klauen ausgestattet. Der Linearantrieb ist in einer bevorzugten Ausführung als Säule ausgelegt, wobei die Drehachse der Motorwelle mit der Drehachse des rotierend antreibbaren Getriebelementes miteinander fluchten.

Anhand der beiliegenden Zeichnungen, die ein bevorzugtes Ausführungsbeispiel zeigen, wird die Erfindung noch näher erläutert. Es zeigen:
- Figur 1: einen erfindungsgemäßen Linearantrieb in einer sprengbildlichen Darstellung
- Figuren 2 und 3: die beiden Kupplungshälften jeweils in zwei verschiedenen Darstellungen.

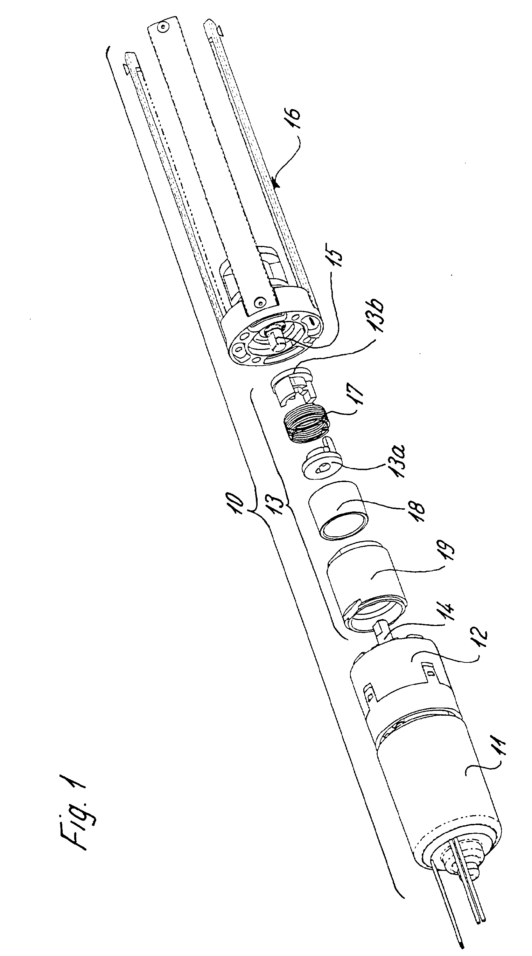

Der in der Figur 1 dargestellte Linearantrieb 10 ist als Hubsäule ausgelegt. Der Linearantrieb 10 könnte jedoch auch anders ausgelegt sein. Wesentlich ist, dass sich das Abtriebsglied des Linearantriebes 10 bei eingeschaltetem Motor linear bewegt. Der dargestellte Linearantrieb 10 ist mit einem Antriebsmotor 11 ausgestattet, der in bevorzugter Ausführung ein Gleichstrommotor ist, der mit einer Sicherheitsspannung im unteren Bereich betrieben wird. Direkt mit dem Antriebsmotor 11 ist ein nicht näher erläutertes Getriebe 12 gekoppelt, damit die Drehzahl der Motorwelle herabgesetzt wird. Mittels einer noch näher erläuterten Kupplung 13 ist der Abtriebszapfen 14 des Getriebes 12 mit einer Spindel 15 gekoppelt. Auf die Spindel 15 ist das linear verfahrbare Abtriebsglied 16 aufgesetzt.

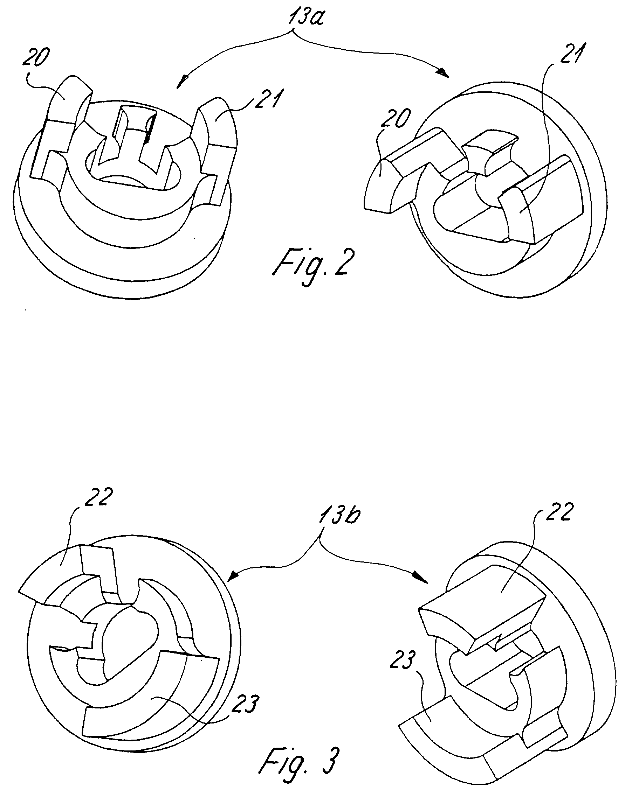

Die Kupplung 13 ist als Klauenkupplung ausgebildet und enthält die beiden Kupplungshälften 13a und 13b, die in den Figuren 2 und 3 noch genauer dargestellt sind. Die beiden Kupplungshälften 13a, 13b greifen ineinander und werden von den Windungen einer Schlingfeder 17 umgriffen. Die Schlingfeder 17 steht in einer bevorzugten Ausführung mit der Kupplungshälfte 13b in einer Mitnahmeverbindung, die mit der Spindel 15 gekoppelt ist. Die beiden Kupplungshälften 13a, 13b und die Schlingfeder 17 werden in eine Bremshülse 18 eingesetzt. Der Innendurchmesser der Bremshülse 18 ist so auf den Außendurchmesser der Schlingfeder 17 abgestimmt, dass im Normalbetriebszustand, d.h. bei eingeschaltetem Antriebsmotor 11 die Schlingfeder ungehemmt durch eine der beiden Kupplungsdhälften 13a, 13b mitgenommen wird. Wird jedoch der Antriebsmotor 11 abgeschaltet, kann sich im dargestellten Ausführungsbeispiel die Kupplungshälfte 13b um einen geringen Winkel gegenüber der Kupplungshälfte 13a verdrehen, wodurch die Schlingfeder 17 aufgeweitet wird. Dadurch erhalten die Federwindungen Kontakt mit der Innenfläche der Bremshülse 18 so dass auch bei abgeschaltetem Antriebsmotor 11 durch Reibkraft die Last gehalten wird bzw. der normalerweise nicht selbsthemmende Linearantrieb 10 wie ein selbsthemmender Antrieb wirkt. Im dargestellten Ausführungsbeispiel wird aus den beiden Kupplungshälften 13a, 13b der Schlingfeder 17 und der Bremshülse 18 eine Baueinheit gebildet, die vormontiert werden kann. Der Linearantrieb 10 ist so ausgelegt, dass auf diese Baueinheit verzichtet werden kann, so dass im Bedarfsfalle der Abtriebszapfen 14 des Getriebes 12 mit der Spindel 15 direkt gekuppelt werden kann. Bei der Ausführung nach der Figur 1 wird die aus den beiden Kupplungshälften 13a, 13b, der Schlingfeder 17 und der Bremshülse 18 gebildete Baueinheit noch in eine äußere Kupplungshülse 19 eingesetzt. Diese gehört dann auch zu der Baueinheit. Unabhängig ob diese äußere Kupplungshülse 19 verwendet wird oder nicht, muß sichergestellt sein, dass sich die Bremshülse 18 beim Kontakt mit der Schlingfeder 17 nicht verdreht. Die Figur 2 zeigt die Kupplungshälfte 13a die mit dem Abtriebszapfen 14 des Getriebes 12 gekoppelt ist. Sie ist mit zwei einander gegenüberliegenden Klauen 20, 21 ausgestattet die sich über einen gleichen Winkel erstrecken. Die Figur zeigt, dass die Bohrung nicht kreisrund ist, sondern abgeflacht, so dass durch eine entsprechende Fläche des Abtriebszapfens 14 eine formschlüssige Verbindung gegeben ist. Die Figur 3 zeigt, dass sich die Klauen 22, 23 der Kupplungshälfte 13b über unterschiedliche Winkel erstrecken. Die Bohrung ist außerdem wiederum abgeflacht, so dass die Verbindung mit der Spindel 15 durch eine entsprechende Fläche hergestellt wird. Die Klauen 22, 23 sind so gestaltet, dass sich nach dem Abschalten des Antriebsmotors 11 die Kupplungshälfte 13b noch ein klein wenig gegenüber der Kupplungshälfte 13a verdrehen kann. Dadurch wird die Schlingfeder 17 mitgenommen und aufgeweiht.

Die Erfindung ist nicht auf das dargestellte Ausführungsbeispiel beschränkt. Wesentlich ist, dass im Normalbetriebszustand, d.h. bei eingeschaltetem Antriebsmotor 11 die Schlingfeder in beiden Drehrichtungen ungebremst durch die jeweilige Kupplungshälfte mitgenommen wird, während nach dem Abschalten des Antriebsmotors 11 sie in die Bremsstellung verformt wird.

## Patentansprüche

1. Linearantrieb vorzugsweise ein Stelltrieb, mit einem oder mit mehreren Antriebszügen und bei dem jeder Antriebszug mit einem Antriebsmotor, mit einem die Drehzahl herabsetzenden Getriebe zum Antrieb eines rotierend antreibbaren Getriebeelementes sowie mit einer Schlingfeder zum Halten der Last bei Stillstand des Antriebsmotors ausgestattet ist, **dadurch gekennzeichnet, dass** die Schlingfeder (17) mit einem rotierend antreibbaren Bauteil (13) des Linearantriebes (10) derart in einer Mitnahmeverbindung steht, dass in einer bestimmten Drehrichtung des rotierend antreibbaren Bauteils (15) die Schlingfeder (17) durch Verformung als ein nach dem Friktionsprinzip arbeitendes Bremselement wirkt.

2. Linearantrieb nach Anspruch 1, **dadurch gekennzeichnet, dass** die Schlingfeder (17) durch Aufweitung als Bremselement wirkt, wobei die Windungen sich an der Innenfläche einer unverdrehbaren Bremshülse (18) abstützen.

3. Linearantrieb nach Anspruch 1, **dadurch gekennzeichnet, dass** das Getriebe (12) mit dem rotierend antreibbaren Getriebeelement (15) durch eine Kupplung (13) miteinander antriebstechnisch gekoppelt ist.

4. Linearantrieb nach Anspruch 3, **dadurch gekennzeichnet, dass** die Kupplung (13) als Klauenkupplung ausgebildet ist, und dass ein Ende der Federwindungen der Schlingfeder (17) mit einer der Kupplungshälften (13b) in der Mitnahmeverbindung steht.

5. Linearantrieb nach einem oder mehreren der vorhergehenden Ansprüche 1 bis 4, **dadurch gekennzeichnet, dass** zumindest aus der Kupplung (13) der Schlingfeder (17) und der Bremshülse (18) eine vormontierbare Baueinheit gebildet ist, die wahlweise einsetzbar ist.

6. Linearantrieb nach Anspruch 5, **dadurch gekennzeichnet, dass** die Baueinheit in eine äußere Kupplungshülse (19) eingesetzt ist.

7. Linearantrieb nach einem oder mehreren der vorhergehenden Ansprüche 1 bis 6, **dadurch gekennzeichnet, dass** die ineinandergreifenden Klauen (20-23) der Kupplungshälften (13a, 13b) mit Spiel derart ineinandergreifen, dass nach dem Abschalten des Antriebsmotors (11) die dem rotierend antreibbaren Getriebelement (15) zugeordnete Kupplungshälfte (13b) zum Überführen der Schlingfeder (17) in die Bremsstellung sich um einen relativ geringen Winkel gegenüber der anderen Kupplungshälfte (13a) verdreht.

8. Linearantrieb nach Anspruch 7, **dadurch gekennzeichnet, dass** die Kupplungshälften (13a, 13b) mit jeweils zwei Klauen (20-23) ausgestattet sind, und dass vorzugsweise die dem rotierend antreibbaren Getriebeelement (15) zugeordnete Kupplungshälfte (13b) mit Klauen (22, 23) ausgestattet ist, die sich über unterschiedliche Winkelbereiche erstrecken.
